# FASCICULE DE BREVET EUROPEEN

(11) **EP 1 549 103 B1**
(45) Date de publication et mention de la délivrance du brevet: **20.10.2010**
(21) Numéro de dépôt: 04293065.1
(22) Date de dépôt: 20.12.2004
(51) Int. Cl.: H04Q 11/00

(54) **Système de communication de paquets pour noeud de réseau de communication**
Paketdatenfunkkommunikationssystem in einem Netzwerkknoten
Packet communication system within a communication network node

(30) Priorité: 23.12.2003 FR 0315222
(43) Date de publication de la demande: 29.06.2005
(73) Titulaire: Alcatel Lucent, 75008 Paris (FR)
(72) Inventeur: Noirie, Ludovic, 91620 Nozay (FR); Cucchi, Silvio, 20083 Gaggiano (Milano) (IT); Post, Georg, 91620 La Ville du Bois (FR)
(74) Mandataire: Shamsaei Far, Hassan

(56) Documents cités:
- WO-A-01/69834
- US-A- 5 513 174
- US-A1- 2003 137 975
- US-B1- 6 665 495

## Description

L'invention se situe dans le domaine des réseaux de télécommunication et concerne les systèmes de commutation utilisés dans les noeuds de réseau.

L'invention concerne plus particulièrement les systèmes de commutation aptes à traiter des données organisées en paquets (commutation de paquets). Elle concerne aussi les systèmes de commutation dits "multiservice", c'est-à-dire capables d'effectuer des commutations de paquets, mais aussi de traiter des données organisées selon d'autres formats de transmission (commutation de circuits), typiquement les données organisées en multiplex temporels (dits "TDM") tels que ceux conformes aux protocoles SDH ou SONET, ou encore ODU ("Optical Data Unit").

Le terme "paquet" désigne ici tout ensemble de données qui regroupe selon un format préétabli des données d'information à transmettre (appelées "charge utile", ou "payload" en anglais) et des données auxiliaires contenues par exemple dans une en-tête du paquet ("header" en anglais). L'en-tête contient en particulier une indication de la destination du paquet et généralement une classe de qualité de service. L'indication peut être une adresse de destination explicite ou un "label" représentatif de cette destination. Parmi les formats de paquets les plus courants, on peut citer les paquets IP (Internet Protocol), MPLS ou Ethernet qui sont de taille variable, et les cellules ATM qui sont de taille fixe.

WO 01/69834 A divulgue une trame configurée pour être transmise sur un réseau et pour stocker des paquets de données dans une pluralité de canaux.

Il est rappelé qu'un réseau comporte une pluralité de noeuds reliés entre eux par des liaisons de transmission. Un noeud est souvent relié à plusieurs autres noeuds et intègre alors des fonctions de routage pour aiguiller sélectivement les données portées par des signaux reçus de liaisons amont vers d'autres liaisons aval en fonction des destinations respectives des données. Certains noeuds ont des fonctions d'accès permettant l'introduction de données dans le réseau et/ou l'extraction de données à partir du réseau.

Pour réaliser une fonction de routage, un noeud est équipé d'un système de commutation ou plus simplement "commutateur" ("switch" en anglais). Un système de commutation comporte d'une part plusieurs ports d'entrée reliés par des liaisons amont à des émetteurs de stations d'utilisateurs ou d'autres noeuds, et d'autre part plusieurs ports de sortie reliés par des liaisons aval à des récepteurs d'autres stations d'utilisateurs ou d'autres noeuds. D'une façon générale, le système de commutation a pour fonction d'aiguiller les flux de données reçues par ses divers ports d'entrée, sélectivement en fonction de leurs destinations respectives, vers des ports de sortie affectés à ces destinations.

Un rôle essentiel d'un système de commutation est la gestion des conflits, c'est-à-dire le contrôle permanent de l'aiguillage des données de sorte que plusieurs données reçues destinées à un même port de sortie soient dirigées vers ce port à des instants différents. La performance d'un système est évaluée par sa bande passante, c'est-à-dire le débit total de données binaires qu'il peut en moyenne aiguiller sans pertes de données.

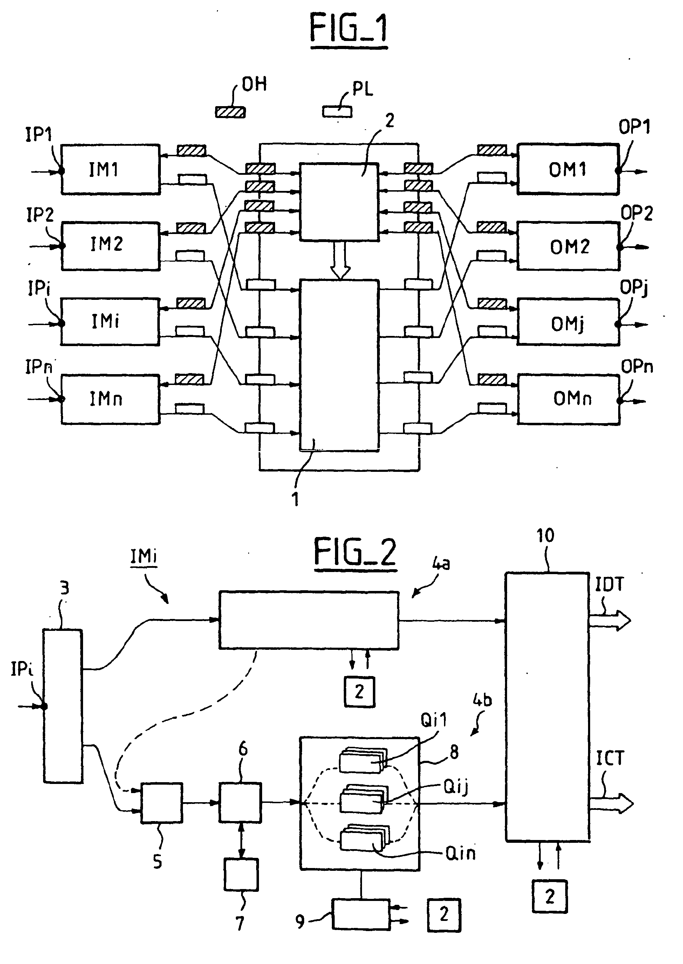

La figure 1 représente schématiquement une structure typique d'un système de commutation. Ce système comporte une matrice de commutation 1 pilotée par un contrôleur 2, une pluralité de modules d'entrée IM1, IM2, IMi, IMn et un pluralité de modules de sortie OM1, OM2, OMj, OMn. Les modules d'entrée sont reliés respectivement à des liaisons amont par des ports d'entrée IP1, IP2, IPi, IPn, et les modules de sortie sont reliés respectivement à des liaisons aval par des ports de sortie OP1, OP2, OPj, OPn. Les modules d'entrée et de sortie coopèrent d'autre part avec la matrice 1 et le contrôleur 2 qui rassemblent les fonctions centrales du système.

Les données reçues à commuter reçues par les ports d'entrée IPi sont transmises à la matrice par les modules d'entrée IMi, et en fonction de commandes reçues du contrôleur 2, la matrice effectue un aiguillage sélectif de ces données vers les ports de sortie OPj par l'intermédiaire des modules de sortie OMj. Chaque module d'entrée IMi ou de sortie OMj communique aussi avec le contrôleur 2 pour échanger des signaux et informations de contrôle utiles au bon déroulement de l'aiguillage sélectif.

Plus précisément, chaque module d'entrée IMi a un rôle d'interface physique avec la liaison amont associée et comporte des moyens de mémorisation et de traitement des données reçues, ces moyens étant conçus pour stocker temporairement ces données, par exemple dans le cas de paquets en formant et gérant des files d'attente. Si plusieurs classes de qualité de service sont prévues dans le réseau, on prévoit plusieurs files d'attente affectées respectivement à ces classes.

La gestion des files d'attente consiste d'une part à remplir ces files en permanence avec les nouvelles données reçues, et d'autre part à extraire de ces files les données autorisées à être transférées vers la matrice. Pour cela, les modules d'entrée dialoguent chacun avec une "unité d'arbitrage" ("scheduler" en anglais) faisant partie du contrôleur 2 selon le schéma général suivant. A des instants successifs, chaque module d'entrée envoie à l'unité d'arbitrage des requêtes ("Request") l'informant des états de remplissage de ses files d'attente. En fonction des requêtes en attente reçues de tous les modules d'entrée, l'unité d'arbitrage détermine selon des critères prédéfinis les données que chaque file d'attente sera autorisée à transférer vers la matrice, puis en informe les modules d'entrée sous la forme de messages d'autorisation ("Grant"). En fonction des messages d'autorisation qu'il reçoit, chaque module d'entrée effectue les mises à jour de ses files d'attente en procédant aux transferts des données correspondantes vers la matrice de commutation.

Pour que la matrice puisse réaliser la commutation des données ainsi transférées, le contrôleur de la matrice doit en particulier connaître vers quels ports de sortie respectifs ces données transférées doivent être aiguillées par la matrice.

Dans le cas où les données sont sous la forme de paquets, ces informations d'aiguillage sont obtenues à partir des destinations contenues dans les en-tête des paquets et en fonction d'informations de routage chargées au préalable dans une table de routage. Dans les systèmes classiques de commutation, les modules d'entrée sont chargés d'élaborer ces informations d'aiguillage et de les transmettre au contrôleur en même temps que sont transférés vers la matrice les paquets associés. Le contrôleur prend alors en compte l'information d'aiguillage associée à chaque paquet de façon à pouvoir l'aiguiller en conséquence individuellement.

Selon cette procédure, la commutation est effectuée avec une granularité optimale pour respecter les contrainte de qualité de service. En effet, outre la condition de ne pas sélectionner simultanément des paquets en conflit, les différents critères servant à choisir les paquets à extraire des files d'attente sont fonction notamment des ordres d'arrivée des paquets et de leurs classes de qualité de service. Avec une granularité de la taille des paquets, ces critères sont applicables au cas par cas pour chaque paquet et selon un ordre de prise en compte rigoureux.

En contrepartie, cette méthode impose au contrôleur de traiter l'information d'aiguillage associée à chaque paquet à commuter. La quantité de données de contrôle à prendre en compte est donc relativement élevée par rapport à la quantité des données d'information "utiles" (charges utiles) commutées. Ces données de contrôle sont habituellement désignées par le terme anglais "overhead", aussi appelé "sur-débit". Cet aspect est représenté sur la figure 1, où la charge utile et le sur-débit sont symbolisés respectivement par des rectangles blancs PL et des rectangles hachurés OH.

Pour limiter le sur-débit, une possibilité est de concevoir un processus qui permet de regrouper dans chaque module d'entrée une pluralité paquets destinés à un même port de sortie avant de les transférer par blocs entiers vers la matrice. Ainsi, une seule information d'aiguillage est nécessaire pour l'ensemble des paquets d'un même bloc. De tels blocs de paquets sont généralement désignés par le terme anglais "burst".

Un tel processus est décrit dans US-B1-6 665 495, qui fonde le préambule de la revendication 1.

Pour appliquer ce principe à un système de commutation, on peut utiliser la méthode suivante. On définit d'abord une taille fixe de bloc de données, cette taille (définie par un nombre fixé d'octets) étant choisie très supérieure à la taille maximale des paquets, par exemple de l'ordre de la dizaine ou de quelques dizaines de milliers d'octets. Les transferts de données d'un module d'entrée vers la matrice s'effectuant avec un débit donné constant, cette taille fixe de bloc conduit à définir une durée de cycles de commutation également constante. La durée de cycle est typiquement égale au temps de transfert d'un bloc.

Chaque module d'entrée est d'autre part prévu pour constituer plusieurs files d'attente organisées à la fois par ports de sortie et par classes de qualité de service. Ainsi, chacune de ces files contient les paquets en attente destinés à un port de sortie donné et bénéficiant d'une classe de qualité de service donnée.

Par ailleurs, on définit une structure de données (ou trame) de même taille que le bloc et qui peut se réduire à un champs d'en-tête de taille fixe suivie d'un champs également de taille fixe réservé aux paquets. Chaque module d'entrée est alors prévu pour former à partir des paquets de chacune de ses files d'attente des blocs de données conformes à la structure prédéfinie, c'est-à-dire un en-tête identifiant la file d'attente, donc le port destinataire concernée, et des paquets ou parties de paquets de cette file.

Au rythme du temps de cycle de commutation et en fonction de certains critères relatifs aux états des files d'attente (seuil de remplissage, temps d'attente), chaque module d'entrée émet des requêtes à l'unité d'arbitrage.

A chaque cycle, en fonction de toutes les requêtes issues en parallèle de tous les modules d'entrée, l'unité d'arbitrage exécute un algorithme pour sélectionner des files d'attente dont les blocs de données associés sont autorisés pour être transférés au cours d'un même cycle ultérieur vers la matrice. Entre autres critères possibles, cette sélection doit satisfaire au moins à ces conditions : seules des files d'attente associées à des ports de sortie différents et appartenant à des modules d'entrée différents peuvent être sélectionnées pour des transferts au cours d'un même cycle. L'unité d'arbitrage envoie aux modules d'entrée des messages d'autorisation identifiant des blocs à transférer correspondants. En réponse à ces messages d'autorisation, les modules d'entrée envoient les blocs de données relatifs aux files d'attente sélectionnées.

Par rapport au processus classique de transferts de paquets accompagnés chacun de l'information d'aiguillage associée, cette dernière solution permet de réduire le sur-débit (overhead) proportionnellement au nombre de paquets contenus en moyenne dans les blocs.

Elle présente toutefois l'inconvénient suivant. I1 peut se produire que l'algorithme sélectionne des files d'attente dont les tailles de remplissage (en nombre d'octets) sont inférieures à la taille prédéfinie des blocs. Compte tenu du caractère cyclique du fonctionnement, les blocs transférés correspondants ne seront dans ce cas que partiellement remplis de paquets. Il en résulte que la capacité de la matrice, en terme de bande passante, est alors sous-utilisée. Une telle situation n'est pas rare et se produit typiquement lorsqu'une file d'attente d'une classe de qualité de service très prioritaire comporte en moyenne un très faible nombre de paquets. Pour respecter la règle de priorité correspondante, l'algorithme devra généralement sélectionne cette file sans attendre qu'elle soit suffisamment remplie pour pouvoir constituer des blocs totalement remplis de paquets.

Un but de l'invention est de proposer un système de commutation qui ne présente pas les inconvénients des systèmes mentionnés précédemment.

Plus précisément, l'invention a pour objet un système de commutation pour noeud de réseau de communication, comprenant une pluralité de modules d'entrée reliés chacun à une matrice de commutation et à un contrôleur commandant ladite matrice, ledit système étant apte à aiguiller des flux de paquets de données reçus par lesdits modules d'entrée, sélectivement en fonction de leurs destinations respectives, vers des ports de sortie destinataires, chaque module d'entrée comportant des moyens de traitement des paquets reçus, ces moyens étant conçus pour organiser ces paquets en blocs de données numériques, chacun de ces blocs ayant une taille fixée, et pour procéder aux transferts de ces blocs par cycles successifs vers la matrice, caractérisé en ce que chacun de ces blocs est organisé en groupes de données numériques, ces groupes étant rangés selon un ordre prédéterminé et associés respectivement auxdits ports de sortie, chacun de ces groupes étant formé de données numériques appartenant à un ou plusieurs paquets destiné(s) audit port de sortie associé, en ce que lesdits groupes ont des tailles respectives modifiables, en ce que tout transfert de bloc vers la matrice est accompagné d'une transmission audit contrôleur d'une information représentative des tailles respectives desdits groupes du bloc transféré, et en ce que les groupes de chaque bloc transféré sont aiguillés vers leurs ports de sortie destinataires respectifs, ces ports de sortie étant identifiés au moyen de ladite information représentative de la taille de chacun desdits groupes du bloc transféré.

L'avantage de cette solution est qu'à chaque cycle de transfert les tailles respectives des groupes peuvent être optimisées de façon à remplir au mieux les blocs tout en respectant les critères de priorité de commutation qui doivent être appliqués à certains paquets. Par ailleurs, le sur-débit est limité à la quantité d'information nécessaire pour décrire les tailles des groupes de chaque bloc transféré. Comme le nombre de groupes par bloc correspond aux nombre de ports de sortie et le nombre de blocs transmis par cycle correspond aux nombre de ports d'entrée, la quantité d'information de sur-débit par cycle sera donc proportionnelle au produit de ces deux nombres de ports, indépendamment du nombre total de paquets à commuter.

Selon un mode de réalisation particulier, chacun desdits modules d'entrée étant apte à constituer et gérer des files d'attente de paquets reçus à commuter, chaque module d'entrée transmet à une unité d'arbitrage des requêtes comportant des informations d'état représentatives de conditions d'attente des paquets dans lesdites files. L'unité d'arbitrage détermine, en fonction des requêtes reçues de tous les modules d'entrée, des tailles respectives de groupes de blocs à organiser respectivement dans lesdits modules d'entrée, et l'unité d'arbitrage envoie aux modules d'entrée des messages d'autorisation indiquant lesdites tailles respectives des groupes.

Selon un autre aspect de réalisation, lesdits ports de sortie sont reliés à la matrice par l'intermédiaire respectivement de modules de sortie associés. Les groupes de données numériques reçus par la matrice au cours d'un même cycle sont transférés au cours d'un cycle ultérieur sélectivement depuis la matrice vers les modules de sortie associés respectivement aux ports de sortie destinataires, lesdits transferts de groupes vers un module de sortie donné s'effectuant par cycles successifs, et au cours de chaque cycle selon un ordre prédéterminé fonction des modules d'entrée d'où sont issus lesdits groupes. De plus, tout transfert au cours d'un cycle de groupes vers un module de sortie donné est accompagné d'une transmission à ce module de sortie d'une information représentative des tailles respectives desdits groupes transférés.

Avantageusement, le système de commutation peut être adapter pour prendre en compte des paquets de contrôle servant à la gestion des noeuds du réseau. Selon cet autre aspect de l'invention, ledit réseau étant prévu pour permettre des échanges d'informations de contrôle entre noeuds sous la forme de paquets de contrôle, lesdits moyens de traitement sont conçus pour recevoir lesdits paquets de contrôle et pour organiser lesdits blocs en groupes de données numériques pouvant appartenir à des paquets destinés à des ports de sortie ou à des paquets de contrôle, ces groupes étant rangés selon un ordre prédéterminé.

L'invention concerne aussi un système de commutation multiservice dans lequel la matrice peut exécuter à la fois des commutations de paquet et des commutations de canaux de multiplex temporel. Ainsi, l'invention a également pour objet un système de commutation apte à aiguiller des données de multiplex temporels organisées par trames selon un format fixé. Lesdits moyens de traitement sont alors conçus pour délimiter dans lesdits blocs un champs réservé auxdites données de multiplex temporel, ce champs réservé ayant une position dans lesdits blocs fixée et une taille donnée, modifiable à l'initiative d'un gestionnaire de réseau.

Selon un autre aspect, ladite trame du multiplex temporel comportant d'une succession de champs réservés à des canaux temporels entrelacés, les données de champs successifs réservés à un même canal temporel étant prévues pour être transmises au rythme d'une période nominale donnée, la durée desdits cycles de transferts de blocs est égale à un multiple entier de ladite période.

Cette dernière disposition, applicable typiquement aux formats SDH ou SONET, présente l'avantage de simplifier le séquencement des traitements portant sur les données des multiplex temporels.

D'autres aspects et avantages de l'invention apparaîtront dans la suite de la description en référence aux figures.
- La figure 1 commentée précédemment représente schématiquement un exemple de système de commutation où l'invention peut être mise en oeuvre.
- La figure 2 représente schématiquement un module d'entrée du système de commutation.
- Les figures 3 et 4 montrent des structures de blocs de données constitués conformément à l'invention, respectivement dans les modules d'entrée et en amont des modules de sortie du système de commutation.
- La figure 5 représente une matrice de commutation apte à mettre en oeuvre l'invention.
- La figure 6 représente un aspect de réalisation préféré de la matrice de commutation.

La figure 2 représente un module d'entrée prévu pour un système de commutation multiservice. Le module IMi comporte dans ce cas une première voie 4a dédiée au traitement des multiplex temporels, dite voie TDM, et une seconde voie 4b pour le traitement des paquets, dite voie paquets. Les deux voies 4a, 4b sont reliées chacune en amont à un circuit d'interface d'entrée 3 et en aval à un circuit d'interface de sortie 10. Il faut noter que l'on peut aussi avoir des modules d'entrée ne comportant que la voie 4a (module d'entrée purement TDM) et aussi des modules d'entrée ne comportant que la voie 4b (module d'entrée purement paquet).

Le circuit d'interface d'entrée 3 reçoit par un port d'entrée associé IPi les signaux apportés par une liaisons amont. Ce circuit constitue essentiellement une interface physique avec la liaison par exemple pour réaliser une éventuelle conversion sous forme électrique des signaux reçus, pour leur mises en forme et leurs conversions sous forme numérique. Le circuit 3 intègre aussi une fonction d'aiguillage vers la voie TDM ou la voie paquets en fonction d'une commande de gestion de réseau qui détermine le type de format prévu, TDM ou paquets, des données reçues.

La voie TDM est essentiellement constituée d'un processeur TDM de type classique chargé d'effectuer des opérations de démultiplexage temporel et des transferts de données vers la matrice 1 en réponse à des dialogues échangés avec le contrôleur 2.

La voie paquets se compose successivement d'un étage de reformatage des paquets 5, d'un étage de classement 6 et d'une mémoire 8 de files d'attente.

L'étage de classement 6 prend en compte les indications de destinations et les classes de qualité de service contenues dans les en-tête des paquets. L'étage 6 coopère avec une table de routage 9 pour déterminer en fonction de ces indications de destinations et d'informations de routage chargées au préalable dans la table 9 les ports de sortie vers lesquels doivent être aiguillés les paquets reçus.

En fonction de ces éléments, et sous le contrôle d'une unité 9 de gestion des files d'attente, des files d'attente de paquets Qil, Qij, Qin sont constitués dans la mémoire 8. Une file d'attente sera constituée de paquets d'une même classe de qualité de service et destinés à un même port de sortie. L'unité de gestion 9 met à jour les files d'attente d'une part en fonction des nouveaux paquets reçus, et d'autre part en fonction d'autorisations de transferts de paquets en attente vers la matrice.

Ces autorisations proviennent d'une unité d'arbitrage du contrôleur 2 avec laquelle l'unité 9 dialogue de la façon suivante. L'unité 9 transmet à l'unité d'arbitrage des requêtes comportant des informations d'état représentatives de conditions d'attente des paquets dans les files. En fonction des requêtes reçues de tous les modules d'entrée, l'unité d'arbitrage détermine pour chaque file d'attente de chaque module d'entrée la taille (en terme de nombre d'octets ou de mots binaires adressables en une seule opération) de l'espace mémoire de la file à transférer. L'unité d'arbitrage envoie alors aux modules d'entrée des messages d'autorisation indiquant ces tailles.

Pour déterminer ces tailles, l'unité d'arbitrage exécute un algorithme de choix qui vise d'abord à satisfaire aux critères de qualité de service en attribuant en priorité des tailles appropriées aux files d'attente les plus privilégiées.

Mais l'organisation par groupes permet en outre de concevoir un algorithme qui a pour effet de remplir au maximum les blocs à transférer dans la limite des tailles allouées aux paquets, ces tailles allouées pouvant dépendre des entrées et des sorties considérées, et ainsi d'optimiser l'utilisation de la bande passante. Par exemple, le fait de pouvoir attribuer des tailles qui ne correspondent pas à des paquets entiers contribue à cet objectif. De même l'algorithme peut tenir compte des tailles de remplissage effectif des files d'attente et ne jamais attribuer une taille autorisée pour une file d'attente qui soit supérieure à sa taille de remplissage effectif.

Par ailleurs, l'algorithme peut être conçu pour assurer un certaine "équité" dans la prise en compte des paquets en attente dans les diverses files d'attente des divers modules d'entrée. Par exemple, la détermination des tailles peut imposer systématiquement une taille minimale accordée aux premières files d'attente prises en compte par l'algorithme et en permutant d'un cycle au suivant l'ordre de prise en compte des files d'attente et des modules d'entrée.

Conformément à l'invention, l'unité de gestion 9 et l'interface de sortie 10 sont conçus pour organiser les paquets ainsi autorisés en blocs de données numériques, chacun de ces blocs ayant une taille fixée, et pour procéder à leurs transferts par cycles successifs vers la matrice 1.

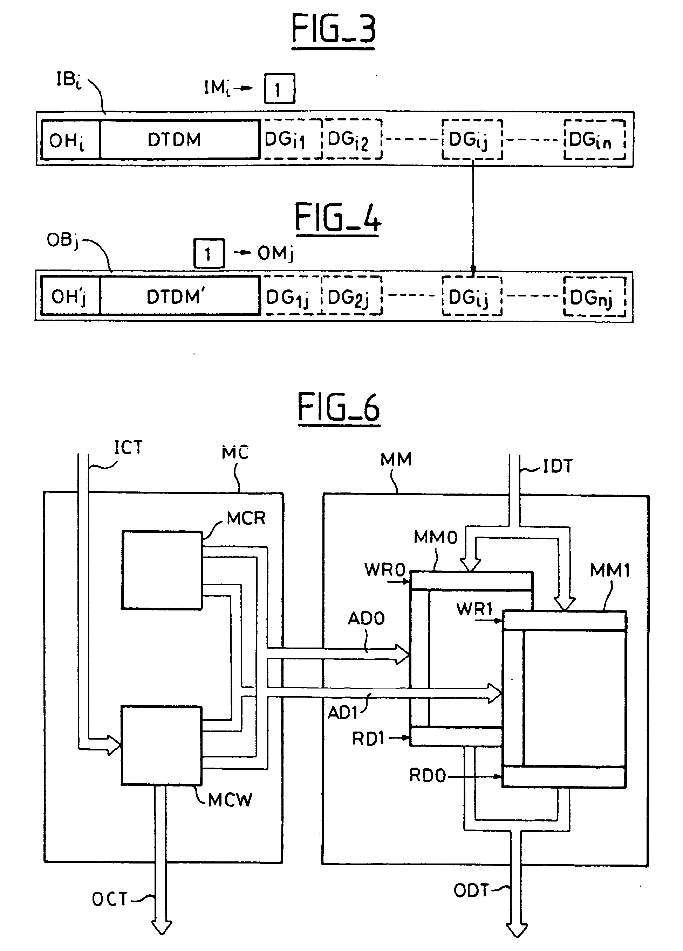

Un exemple de format d'un tel bloc IBi formé par le module d'entrée IMi est représenté plus précisément à la figure 3. Chacun de ces blocs est organisé en groupes de données numériques DGi1, DGi2, DGij, DGin. Ces groupes sont rangés selon un ordre prédéterminé et associés respectivement aux ports de sortie OP1, OP2, OPj, OPn, et chacun de ces groupes est formé de données numériques appartenant à un ou plusieurs paquets destiné(s) au port de sortie associé. Les tailles respectives des groupes, qui sont modifiables d'un cycle à l'autre, sont déterminées par l'unité d'arbitrage mentionnée ci-dessus.

L'exemple décrit correspond au cas d'un système de commutation multiservice, c'est-à-dire apte à aiguiller des données de multiplex temporels TDM. Un tel multiplex est constitué de données organisées par trames selon un format fixé, par exemple SDH ou SONET. Dans ce cas, lorsque des donnée TDM sont transmises vers un des modules d'entrée, elles sont traitée par la voie TDM 4a, dont le processeur détermine une taille pour ces données qui sera réservée à chaque cycle de commutation. Cette taille tient compte d'indications fournies par un gestionnaire de réseau ("control plane" en anglais) et peut être modifiée à son initiative. Cette taille réservée est représentée par le champs DTDM du format du bloc IBi représenté à la figure 3. En plaçant ce champs réservé à une position fixée dans les blocs et sa taille étant connue, les règles d'organisation et de traitement des groupes réservés aux paquets restent en fait inchangées, seules les tailles possibles des groupes sont différentes.

On peut noter que le système peut aussi commuter des paquets transportés par un multiplex temporel. Il suffit pour cela de prévoir une possibilité de liaison entre la voie TDM 4a et l'étage de reformatage des paquets 5, comme schématisé par une flèche en pointillés sur la figure 2.

A chaque cycle, le bloc ainsi constitué à partir des files d'attente transite par l'interface de sortie 10 et est transféré vers la matrice 1 par la liaison IDT, sous le contrôle du contrôleur 2.

Dans le cas d'un système de commutation multiservice, il convient de tenir compte de l'organisation particulière des trames TDM. En effet, une trame TDM comporte une succession de champs réservés à des canaux temporels entrelacés et les données de champs successifs réservés à un même canal temporel sont prévues pour être transmises au rythme d'une période nominale donnée. Le traitement des données TDM sera alors facilité si la durée des cycles de transferts de blocs est égale à un multiple entier de cette période.

Il est à noter que le transfert du bloc peut débuter avant que celui-ci ne soit intégralement constitué. Par ailleurs, il n'est pas nécessaire qu'un paquet soit contenu intégralement dans un même groupe. Une partie d'un paquet peut en effet être contenue dans un groupe d'un bloc et le reste du paquet contenu dans un ou plusieurs groupes de blocs transférés lors de cycles suivants.

L'unité de gestion 9 et l'interface de sortie 10 sont d'autre part conçus pour constituer une information représentative des tailles respectives des groupes de chaque bloc constitué. Tout transfert de bloc vers la matrice est alors accompagné d'une transmission au contrôleur de cette information, ainsi qu'une indication de la taille du champs réservé aux données TDM si ce cas est prévu.

Cette information sur les tailles peut être les tailles elles-mêmes des différents champs, ou bien des indications liées à ces tailles telles que les positions relatives des débuts et des fins des champs dans le bloc.

L'information sur les tailles est par exemple contenue dans un autre champs réservé, de taille fixe, prévu dans le format des blocs. Ce cas est illustré sur la figure 3 par le champs OHi. Une autre possibilité serait de transférer l'information sur les tailles par une liaison de contrôle indépendante de la liaison de transfert des blocs.

Ainsi, en fonction de l'information représentative de la taille de chacun des groupes des blocs transférés au cours du même cycle par les différents modules d'entrée, le contrôleur est en mesure de commander la matrice pour aiguiller les groupes de chaque bloc transféré vers leurs ports de sortie destinataires respectifs OP1, OP2, OPj, OPn.

Pour cela, plusieurs possibilités sont envisageables. Selon un mode de réalisation préféré, les ports de sortie sont reliés à la matrice 1 par l'intermédiaire respectivement de modules de sortie OM1, OM2, OMj, OMn qui coopèrent avec la matrice de la façon suivante.

Les groupes de données numériques DGij reçus par la matrice au cours d'un même cycle sont transférés au cours d'un cycle ultérieur (en principe le cycle suivant) sélectivement depuis la matrice vers les modules de sortie associés respectivement aux ports de sortie destinataires. Les transferts de groupes DG1j, DG2j, DGij, DGnj vers un module de sortie donné OMj s'effectuent aussi par cycles successifs, au même rythme que les cycles successifs de transferts de blocs entre les modules d'entrée et la matrice. Au cours de chaque cycle, les groupes sont transférés selon un ordre prédéterminé fonction des modules d'entrée d'où sont issus les groupes. Enfin, au cours d'un cycle tout transfert de groupes vers un module de sortie est accompagné d'une transmission à ce module de sortie d'une information représentative des tailles respectives desdits groupes transférés.

Cette organisation des transferts est illustrée à la figure 4 par un format d'un bloc OBj représentant les groupes DG1j, DG2j, DGij, DGnj destinés au module de sortie OMj. L'information sur les tailles est par exemple contenue dans un champs réservé, de taille fixe, prévu dans le format des blocs. Ce cas est illustré sur la figure 4 par le champs OH'j. Une autre possibilité serait de transférer l'information sur les tailles par une liaison de contrôle OCT indépendante de la liaison ODT de transfert des groupes.

Dans le cas où des données TDM sont prévue, celles-ci sont commutées par le même système de commutation, par des moyens classiques, et placées sélectivement dans un champs réservé des blocs destinés aux modules et ports de sortie qui doivent transférer ces données TDM.

On notera que les formats choisis pour les blocs IBi et OBj déterminent pour chaque cycle de commutation les tailles totales allouées spécifiquement aux paquets, donc aux groupes DGij, aux niveaux des modules d'entrée et de sortie. Cela constitue bien sûr un des éléments pris en compte par l'unité d'arbitrage pour déterminer les tailles respectives des groupes DGij, de sorte que pour chaque module d'entrée et de sortie la taille totale des groupes d'un même bloc soit au plus égale à la taille allouée aux paquets dans le bloc concerné.

En fonction de ces éléments, chaque module de sortie est en mesure de reconstituer les paquets, et après les mises en forme habituelles à les émettre sous la forme de signal par le port de sortie associé. La réalisation pratique d'un tel module de sortie est à la portée d'un homme du métier et ne sera donc pas décrite plus en détail.

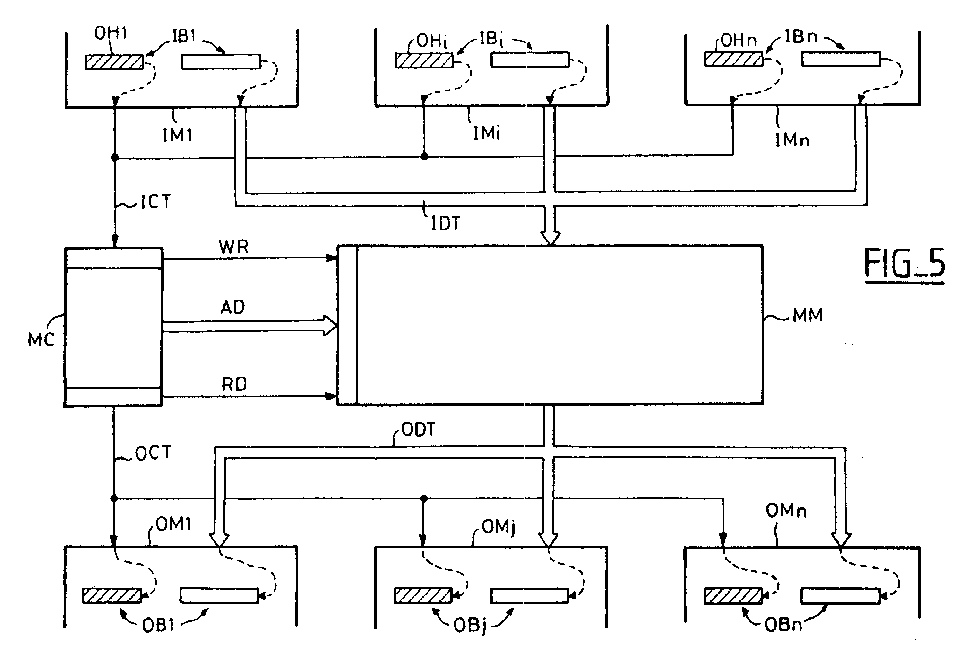

La figure 5 montre une matrice de commutation adaptée à une mise en oeuvre de la commutation des paquets selon l'invention, et qui peut aussi servir à la commutation de circuits TDM de manière classique. Elle comporte essentiellement une mémoire MM associée à une unité de contrôle et d'adressage MC.

Une entrée de la mémoire est reliée aux différents modules d'entrée IM1, IMi, IMn par un bus d'entrée IDT. Ce bus est affecté aux transferts des groupes destinés à être chargés dans la mémoire. Une sortie de la mémoire est reliée aux différents modules de sortie OM1, OMj, OMn par un bus de sortie ODT. Ce bus est affecté aux transferts des groupes destinés aux modules de sortie.

L'unité de contrôle et d'adressage MC communique par des lignes de contrôle ICT et OCT respectivement avec les modules d'entrée et de sortie de façon à recevoir des modules d'entrée, à chaque cycle, les informations sur les tailles des groupes transférés vers la matrice et pour retransmettre les informations sur les tailles des groupes transférés vers les modules de sortie.

Les opérations de commutation des paquets sont commandées par l'unité MC qui déclenche par cycles successifs le stockage dans la mémoire des mots de données des blocs constitués par les modules d'entrée, puis la lecture de ces mots par adressages sélectifs et validations correspondantes de leurs écritures dans les modules de sortie.

Au cours de chaque cycle de stockage, la mémoire est commandée en écriture WR et reçoit de l'unité MC des adresses successives prédéterminées synchronisées au rythme des transferts des mots de données des groupes transférés. Pendant ce cycle, l'unité MC reçoit les informations sur les tailles des groupes et élabore en conséquence des adresses de type pointeurs associées aux groupes reçus. Ces adresses qui sont fonction des destinations respectives des groupes sont calculables à l'aide des informations sur les tailles des groupes successifs.

Au cycle suivant, pour aiguiller les mots de données ainsi stockés vers les modules de sortie destinataires, la mémoire est commandée en lecture RD et reçoit des adresses successives correspondant aux pointeurs élaborés lors du cycle précédent. Les mots lus sont placés successivement sur le bus de sortie ODT et les modules de sortie destinataires sont commandés sélectivement en écriture en conséquence.

Pour de meilleures performances, la mémoire sera avantageusement organisée en deux modules permettant de réaliser des opérations de lecture et d'écriture simultanées. Cette solution est représentée plus en détail à la figure 6.

Les deux modules MM0 et MM1 ont chacun leurs entrée et sortie reliées respectivement aux bus IDT et ODT et sont adressables et commandables en écriture et lecture de façon indépendante. En séparant dans l'unité MC les fonctions d'adressage pour la lecture MCR de celles pour l'écriture MCW, au cours d'un premier cycle, on peut à la fois commander l'écriture WR0 du module MM0 et la lecture RD0 du module MM1, puis au cours d'un cycle suivant commander à la fois la lecture RD1 du module MM0 et l'écriture WR1 du module MM1, et ainsi de suite. Il en résulte que les opérations de commutation peuvent s'effectuer sans temps mort, au rythme des transferts des blocs.

Pour réaliser la commutation des données TDM, la même mémoire est utilisée pour stocker les données TDM. Par contre un module spécifique d'adressage sera prévu pour piloter de façon classique les transferts de données.

L'invention n'est pas limitée aux seuls modes de réalisation décrits ci-dessus.

En particulier, les modules d'entrée et de sortie peuvent être regroupés physiquement sur une même carte électronique.

De même, le contrôleur 2 et en particulier son unité d'arbitrage peuvent être réalisés de façon répartie, par exemple en implantant certaines de leurs fonctions au niveau des modules d'entrée.

## Revendications

1. Système de computation pour noeud de réseau de communication, comprenant une pluralité de modules d'entrée (IM1, IM2. IMi, IMn) reliés chacun à une matrice de commutation (1) et à un contrôleur (2) commandant ladite matrice (1), ledit système étant apte à aiguiller des flux de paquets de données reçus par lesdits modules d'entrée, sélectivement en fonction de leurs destinations respectives,
vers des ports de sortie (OP1, OP2, OPj, OPn) destinataires, chaque module d'entrée (IMi) comportant des moyens de traitement (9, 10) des paquets reçus, ces moyens (9, 10) étant conçus pour organiser ces paquets en blocs de données numériques (IBi), chacun de ces blocs ayant une taille fixée, et pour procéder aux transferts de ces blocs par cycles successifs vers la matrice (1), **caractérisé en ce que** le système est apte à traiter chacun de ces blocs (IBi) organisé en groupes de données numériques (DGi1, DGi2, DGij, DGin), ces groupes étant rangés selon un ordre prédéterminé et associés respectivement auxdits ports de sortie, chacun de ces groupes étant formé de données numériques appartenant à un ou plusieurs paquets destiné(s) audit port de sortie associé, **en ce que** lesdits groupes ont des tailles respectives modifiables, **en ce que** tout transfert de bloc vers la matrice (1) est accompagné d'une transmission audit contrôleur (2) d'une information représentative des tailles respectives desdits groupes du bloc transféré, et **en ce que** les groupes de chaque bloc transféré sont aiguillés vers leurs ports de sortie destinataires respectifs, ces ports de sortie étant identifiés au moyen de ladite information représentative de la taille de chacun desdits groupes du bloc transféré.

2. Système de commutation selon la revendication 1, **caractérisé en ce que** chacun desdits modules d'entrée (IM1, IM2, IMi, IMn) étant apte à constituer et gérer des files d'attente (Qi1, Qij, Qin) de paquets reçus à commuter, chaque module d'entrée transmet à une unité d'arbitrage des requêtes comportant des informations d'état représentatives de conditions d'attente des paquets dans lesdites files, **en ce que** l'unité d'arbitrage détermine, en fonction des requêtes reçues de tous les modules d'entrée, des tailles respectives de groupes de blocs à organiser respectivement dans lesdits modules d'entrée, et **en ce que** l'unité d'arbitrage envoie aux modules d'entrée des messages d'autorisation indiquant lesdites tailles respectives des groupes.

3. Système de commutation selon l'une des revendications 1 ou 2, **caractérisé en ce que** lesdits ports de sortie (OP1, OP2, OPj, OPn) sont reliés à la matrice (1) par l'intermédiaire respectivement de modules de sortie associés (OM1, OM2, OMj, OMn), **en ce que** les groupes de données numériques (DGij) reçus par la matrice au cours d'un même cycle sont transférés au cours d'un cycle ultérieur sélectivement depuis la matrice vers les modules de sortie associés respectivement aux ports de sortie destinataires, lesdits transferts de groupes (DG1j, DG2j, DGij, DGnj) vers un module de sortie donné (OMj) s'effectuant par cycles successifs, et au cours de chaque cycle selon un ordre prédéterminé fonction des modules d'entrée d'où sont issus lesdits groupes, **en ce que** tout transfert au cours d'un cycle de groupes vers un module de sortie donné est accompagné d'une transmission à ce module de sortie d'une information représentative des tailles respectives desdits groupes transférés.

4. Système de commutation selon l'une des revendications 1 ou 2, **caractérisé en ce que** ledit réseau étant prévu pour permettre des échanges d'informations de contrôle entre noeuds sous la forme de paquets de contrôle, lesdits moyens de traitement (9, 10) sont conçus pour recevoir lesdits paquets de contrôle et pour organiser lesdits blocs (IBi) en groupes de données numériques pouvant appartenir à des paquets destinés à des ports de sortie ou à des paquets de contrôle, ces groupes étant rangés selon un ordre prédéterminé.

5. Système de commutation selon l'une des revendications 1 ou 2, ledit système étant apte à aiguiller des données de multiplex temporels organisées par trames selon un format fixé, **caractérisé en ce que** lesdits moyens de traitement (4a, 9, 10) sont conçus pour délimiter dans lesdits blocs un champs (DTDM) réservé auxdites données de multiplex temporel, ce champs réservé ayant une position dans lesdits blocs fixée et une taille donnée, modifiable à l'initiative d'un gestionnaire de réseau.

6. Système de commutation selon la revendication 5, **caractérisé en ce que** le système est apte à traiter ladite trame du multiplex temporel comportant d'une succession de champs réservés à des canaux temporels entrelacés, les données de champs successifs réservés à un même canal temporel étant prévues pour être transmises au rythme d'une période nominale donnée, la durée desdits cycles de transferts de blocs est égale à un multiple entier de ladite période.

## Claims

1. A switching system for a communication network node, comprising a plurality of input modules (IM1, IM2, IMi, IMn) each connected to a switching matrix (1) and to a controller (2) commanding said matrix (1), said system being capable of routing data packet flows received by said input modules, selectively based on their respective destinations, to recipient output ports (OP1, OP2, OPj, OPn), each input module (IMi) comprising means for processing (9, 10) the received packets (9, 10), which means are designed to arrange these packets into digital data blocks (IBi), each of these blocks having a fixed size, and to proceed to the transfer of these blocks to the matrix (1) in successive cycles, **characterized in that**, the system is capable of processing each of these blocks (IBi) arranged into groups of digital data (DGi1, DGi2, DGij, DGin), these groups being sorted into a predetermined order and respectively associated with said output ports, each of these groups being formed of digital data belonging to one or more packet intended for said associated output port, and that said groups have respective editable sizes, **in that** every block transfer to the matrix (1) is accompanied by a transmission to said controller (2) of a piece of information representative of the respective sizes of said groups of the transferred block, and **in that** the groups of each transferred block are routed to said respective recipient output ports, these output ports being identified by means of said information representative of the size of each of said groups of the transferred block.

2. A switching system according to claim 1, **characterized in that** each of said input modules (IM1, IM2, IMi, IMn) being capable of forming and managing queues (Qil, Qij, Qin) of received packets to be switched, each input module transmits to a decision-making unit requests comprising status information representative of packet wait conditions within said queues, **in that** the decision-making unit determines, based on the requests received from all the input modules, the respective sizes of groups of blocks to be respectively arranged within said input modules, and **in that** the decision-making unit sends to the input modules authorization messages indicating said respective sizes of the groups.

3. A switching system according to one of the claims 1 or 2, **characterized in that** said output ports (OP1, OP2, OPj, OPn) are connected to the matrix (1) by the intermediary, respectively, of associated output modules (OM1, OM2, OMj, OMn), **in that** the groups of digital data (DGij) received by the matrix during a single cycle are transferred selectively during a later cycle from the matrix to the output modules respectively associated with the recipient output ports, said transfers of groups (DGij, DG2j, DGij, DGnj) to a given output module (OMj) being carried out in successive cycles, and during each cycle based on a predetermined order that depends on the input modules from which said groups came, **in that** any transfer to a given output module during a cycle of groups is accompanied by a transmission to that output module of a piece of information representative of the respective sizes of said transferred groups.

4. A switching system according to one of the claims 1 or 2, **characterized in that** said network being intended to enable exchanges of control information between nodes in the form of control packets, said means for processing (9, 10) are designed to receive said control packets and to arrange said blocks (IBi) into groups of digital data capable of belonging to packets intended for output ports or to control packets, these groups being sorted in a predetermined order.

5. A switching system according to one of the claims 1 or 2, said system being capable of routing time-division multiplexing data arranged by frames using a fixed format, **characterized in that** said means for processing (4a, 9, 10) are designed to delimit within said blocks a field (DTDM) reserved for said time-division multiplexing data, this reserved field having a position within said fixed blocks and the given size, which may be edited on the initiative of a network manager.

6. A switching system according to claim 5, **characterized in that** the system is capable of processing said frame of the time division multiplexing comprising a succession of fields reserved for interlaced time channels, the successive fields of data reserved for a single time channel being intended to be transmitted at the pace of a given nominal period, the duration of said block transfer cycles is equal to a whole number which is a multiple of said period.

## Patentansprüche

1. Schaltsystem für einen Kommunikationsnetzwerkknoten, umfassend eine Mehrzahl von Eingangsmodulen (IM1, IM2, IMi, IMn), von denen ein jedes an eine Schaltmatrix (1) und an einen Controller (2), welcher die besagte Matrix (1) steuert, angeschlossen ist, wobei das besagte System dazu ausgelegt ist, an den besagten Eingangsmodulen empfangene Datenpaketflüsse ihren jeweiligen Zielen entsprechend selektiv an Ziel-Ausgangsports (OP1, OP2, OPj, OPn) zu routen, wobei jedes Eingangsmodul (IMi) Mittel zur Verarbeitung (9, 10) der empfangenen Pakete umfasst, wobei diese Mittel (9, 10) dazu ausgelegt sind, diese Pakete in digitale Datenblöcke (IBi), von denen ein jeder eine festgelegte Größe aufweist, zu organisieren, und diese Blöcke in aufeinanderfolgenden Zyklen an die Matrix (1) weiterzuleiten, **dadurch gekennzeichnet, dass** das System dazu ausgelegt ist, einen jeden dieser in Gruppen von digitalen Daten (DGi1, DGi2, DGij, DGin) organisierten Blöcke (IBi) zu verarbeiten, wobei diese Gruppen in einer vorbestimmten Reihenfolge angeordnet und jeweils den besagten Ausgangsports zugeordnet sind, wobei eine jede dieser Gruppen aus digitalen Daten, welche einem oder mehreren der für den zugeordneten Ausgangsport bestimmten Pakete angehören, gebildet wird, und dass die besagten Gruppen jeweils veränderbare Größen aufweisen, dass jeder Transfer eines Blocks an die Matrix (1) von einer Übertragung einer für die jeweiligen Größen der besagten Gruppen des weitergeleiteten Blocks repräsentativen Information an den Controller (2) begleitet wird, und dass die Gruppen eines jeden weitergeleiteten Blocks an ihre jeweiligen Ziel-Ausgangsports geroutet werden, wobei diese Ausgangsports anhand der besagten für die Größe einer jeden der besagten Gruppen des weitergeleiteten Blocks repräsentativen Information identifiziert werden.

2. Schaltsystem nach Anspruch 1, **dadurch gekennzeichnet, dass** ein jedes der besagten Eingangsmodule (IM1, IM2, IMi, IMn) dazu ausgelegt ist, Warteschlangen (Qi1, Qij, Qin) für die empfangenen und zu schaltenden Pakete zu bilden und zu verwalten, wobei jedes Eingangsmodul Anforderungen, welche für die Wartebedingungen der Pakete in den besagten Warteschlangen repräsentative Informationen enthalten, an eine Zuteilereinheit sendet; dass die Zuteilereinheit aufgrund der von allen Eingangsmodulen empfangenen Anforderungen die jeweiligen Größen der jeweils in den besagten Eingangsmodulen zu organisierenden Gruppen von Blöcken bestimmt, und dass die Zuteilereinheit Autorisierungsnachrichten, welche die besagten jeweiligen Größen der Gruppen angeben, an die Eingangsmodule sendet.

3. Schaltsystem nach einem der Ansprüche 1 oder 2, **dadurch gekennzeichnet, dass** die besagten Ausgangsports (OP1, OP2, OPj, OPn) jeweils über zugeordnete Ausgangsmodule (OM1, OM2, OMj, OMn) an die Matrix (1) angeschlossen sind, dass die während eines selben Zyklus an der Matrix empfangenen Gruppen von digitalen Daten (DGij) während eines späteren Zyklus selektiv von der Matrix an die jeweils den Ziel-Ausgangsports zugeordneten Ausgangsmodule weitergeleitet werden, wobei die besagten Transfers von Gruppen (DGij, DG2j, DGij, DGnj) an ein gegebenes Ausgangsmodul (OMj) in aufeinanderfolgenden Zyklen, und während jedes Zyklus in einer je nach den Eingangsmodulen, von welchen die besagten Gruppen stammen, vorbestimmten Reihenfolge erfolgen, und dass jeder Transfer von Gruppen während eines Zyklus an ein gegebenes Ausgangsmodul von einer Übertragung einer für die jeweiligen Größen der besagten weitergeleiteten Gruppen repräsentativen Information begleitet wird.

4. Schaltsystem nach einem der Ansprüche 1 oder 2, **dadurch gekennzeichnet, dass** das besagte Netzwerk dafür vorgesehen ist, den Austausch von Steuerungsinformationen zwischen Knoten in der Form von Steuerungspaketen zu ermöglichen, dass die besagten Verarbeitungsmittel (9, 10) dazu ausgelegt sind, die besagten Steuerungspakete zu empfangen und die besagten Blöcke (IBi) in Gruppen von digitalen Daten, welche Paketen, die für Ausgangsports bestimmt sind, oder Steuerungspaketen angehören können, zu organisieren, wobei diese Gruppen in einer vorbestimmten Reihenfolge eingeordnet sind.

5. Schaltsystem nach einem der Ansprüche 1 oder 2, wobei das besagte System dazu ausgelegt ist, Zeitmultiplexdaten, welche gemäß einem festgelegten Format in Rahmen organisiert sind, zu routen, **dadurch gekennzeichnet, dass** die besagten Verarbeitungsmittel (4a, 9, 10) dazu ausgelegt sind, in den besagten Blöcken ein für die besagten Zeitmultiplexdaten reserviertes Feld (DTDM) abzugrenzen, wobei dieses reservierte Feld eine festgelegte Position in den besagten Blöcken hat und eine gegebene Größe aufweist, welche auf Initiative eines Netzwerkverwalters geändert werden kann.

6. Schaltsystem nach Anspruch 5, **dadurch gekennzeichnet, dass** das System dazu ausgelegt ist, den besagten Rahmen des Zeitmultiplex, welcher eine Folge von für verschachtelte Zeitkanäle reservierten Felder enthält, zu verarbeiten, wobei die Daten der aufeinanderfolgenden, für einen selben Zeitkanal reservierten Felder dafür vorgesehen sind, im Takt einer gegebenen Nennperiode übertragen zu werden, wobei die Zeitdauer der besagten Blockübertragungszyklen einem ganzzahligen Vielfachen der besagten Periode entspricht.
